# EUROPÄISCHE PATENTSCHRIFT

(11) **EP 0 760 107 B1**
(45) Veröffentlichungstag und Bekanntmachung des Hinweises auf die Patenterteilung: **03.02.1999**
(21) Anmeldenummer: 95917898.9
(22) Anmeldetag: 09.05.1995
(51) Int. Cl.: G02B 6/42, G02B 3/00

(54) **OPTOELEKTRONISCHE BAUGRUPPE**
OPTO-ELECTRONIC COMPONENT
COMPOSANT OPTOELECTRONIQUE

(30) Priorität: 20.05.1994 DE 4418477
(43) Veröffentlichungstag der Anmeldung: 05.03.1997
(73) Patentinhaber: SIEMENS AKTIENGESELLSCHAFT, 80333 München (DE)
(72) Erfinder: KROPP, Jörg-Reinhardt,Dr., D-12355 Berlin (DE)
(86) Internationale Anmeldenummer: DE9500625
(87) Internationale Veröffentlichungsnummer: WO9532444

(56) Entgegenhaltungen:
- EP-A- 0 117 606
- EP-A- 0 400 176
- EP-A- 0 506 438
- DE-A- 2 510 267

## Beschreibung

Die Erfindung betrifft eine optoelektronische Baugruppe mit einer Basisplatte, die ein optoelektronisches Bauteil mit mindestens einer optisch aktiven Zone trägt, mit einem Linsenkörper mit mindestens einer der optisch aktiven Zone zugeordneten Linse und mit Abstandsmitteln, die integrale Bestandteile des Linsenkörpers sind.

Bei der Herstellung von optoelektronischen Baugruppen oder Modulen ist die präzise optische Ankopplung der optisch aktiven Zone des optoelektronischen Bauteils (z. B. einer Laserdiode) an ein weiteres optisches Element (z. B. einen Lichtwellenleiter) problematisch, insbesondere wenn mehrere optisch aktive Zonen (z. B. eines Dioden-Array) anzukoppeln sind.

Aus der EP-A1-0 506 438 ist eine Baugruppe mit einem optoelektronischen Bauteil in Form eines sogenannten LED-Array mit mehreren in einer Linie beabstandet ausgebildeten Leuchtdioden als optisch aktive Zonen und einem Linsenträger bekannt, der eine der Anzahl und Beabstandung der Dioden entsprechende Anzahl einzelner Linsen (Linsen-Array) trägt. Die Montage und Justage der bekannten Baugruppe ist mangels baugruppeneigener Justageeinrichtungen vergleichsweise aufwendig.

Im Hinblick auf eine erleichterte Montage beschreibt die EP-A1-0 421 118 einen Trägerkörper für eine eingeglaste Linse, der gegenüber einem eine Laserdiode tragenden Körper fixiert ist. Dazu ist eine Flachseite des Trägerkörpers nach seiner Justage mit metallisierten Glasklötzchen verlötbar, die beidseitig des die Laserdiode tragenden Körpers befestigt sind.

Aus der älteren deutschen Patentanmeldung P 43 42 844.4 geht ein gemeinsamer Träger für ein optoelektronisches Bauteil mit einem Laserdioden-Array und für einzeln zu positionierende und zu fixierende Linsen hervor. Zusätzliche separate Linsen sind in Vertiefungen des Trägers einsetzbar und bilden einen mechanischen Anschlag für das Bauteil.

Eine bekannte (EP-A1-0 529 947) optoelektronische Baugruppe umfaßt als erstes Teil eine Basisplatte (Abschlußplatte), die einen lotbeschichteten Kontaktfleck für mindestens ein optoelektronisches Bauteil mit einer optisch aktiven Zone und Bezugspunkte in Form von ersten Ausrichtvertiefungen aufweist. Ein auf den Kontaktfleck aufgesetztes Bauteil wird bei Wiederverflüssigung des Lotes unter Ausnutzung der Lotoberflächenspannung selbsttätig exakt in bezug auf den Kontaktfleck und damit bezüglich der Ausrichtvertiefungen positioniert. Ein anzukoppelnder Lichtwellenleiter verläuft in einer Nut einer zweiten Platte und endet an deren der Basisplatte zugewandten Stirnbereich. Im Stirnbereich ist vor dem Lichtwellenleiterende eine Vertiefung vorgesehen, in die eine separate Kugellinse einsetzbar ist. Im Stirnbereich sind weitere Ausrichtvertiefungen ausgebildet, die mit den ersten Ausrichtvertiefungen kooperieren und Aufnahmeräume bilden. In die Aufnahmeräume sind separate Ausrichtkugeln einsetzbar, die für eine Positionierung und gegenseitige Ausrichtung der beiden Platten in X-Y-Z-Richtung sorgen; die Positionierung des Lichtwellenleiters in Z-Richtung (axialer Richtung) und die Justage und Positionierung der Linse sind nicht näher erläutert und müssen gesondert vorgenommen werden. Die bekannte Baugruppe enthält vergleichsweise viele jeweils präzise zu fertigende, toleranzbehaftete und einzeln handzuhabende Einzelteile.

Die EP-A1-0 117 606 beschreibt einen Kollektor für eine Leuchtdioden-Reihe, bei dem jeder Leuchtdiode eine zentrale Linse mit einer konzentrischen Parabol-Spiegelfläche zugeordnet ist, um von der Leuchtdiode emittiertes Licht zu einem parallelen Strahlenbündel zu formen. Der Kollektor stützt sich über Abstandsmittel auf einer Basisplatte ab, die die einzelnen Leuchtdioden trägt. Damit sind die Verhältnisse bei der Einkopplung und Strahlungsbündelung sowohl von der Bauhöhe der Leuchtdioden, als auch von den Toleranzen der Fügehöhen zwischen den Leuchtdioden und der Basisplatte einerseits und den Abstandsmitteln und der Basisplatte andererseits abhängig. Derartige Toleranzen können bei der beschriebenen Anwendung des Kollektors in einem elektrofotografischen Aufzeichnungsgerät hingenommen werden; bei der Einkopplung von Licht beispielsweise in einen Lichtwellenleiter müssen jedoch um mindestens eine Größenordnung geringere Toleranzen gewährleistet sein.

Die DE-A1-38 30 119 beschreibt eine Baugruppe der eingangs genannten Art, bei der auf einer Basisplatte ein optoelektronisches Bauteil in Form eines Laserchips mit mindestens einer optisch aktiven Zone fixiert ist. Ein Linsenkörper weist eine der Zone zugewandte plane Seitenfläche und eine gegenüberliegende, konvexe Seitenfläche auf, deren Krümmung als asphärische Linse dient. Der Bereich zwischen der Krümmung und der planen Seitenfläche bedingt zwangsläufig einen erheblichen Abstand zwischen dem Laser und der als Linse wirkenden konvexen Seitenfläche, der den Kopplungswirkungsgrad ungünstig beeinflußt. Außerdem ist zwischen der planen Seitenfläche und dem Laser ein Material einzubringen, das zur Vermeidung von Reflexionen dient. Durch den Kontakt mit diesem Material kann die zugewandte Laserspiegelfläche insbesondere bei häufigen Temperaturwechselspielen strapaziert und gechädigt werden.

Der Erfindung liegt daher die Aufgabe zugrunde, eine optoelektronische Baugruppe mit einem sehr hohen Kopplungswirkungsgrad, insbesondere mit mehreren zusammenwirkenden optisch aktiven Zonen und Linsen, fertigungstechnisch einfach auszubilden und den Justageaufwand zu minimieren.

Diese Aufgabe wird bei einer optoelektronischen Baugruppe der eingangs genannten Art erfindungsgemäß dadurch gelöst, daß die Abstandsmittel zur Einstellung eines gewünschten lichten Abstandes zwischen der optisch aktiven Zone und der Linse unmittelbar an dem optoelektronischen Bauteil anliegen.

Die erfindungsgemäße Baugruppe kommt mit einer erheblich reduzierten Anzahl handzuhabender und zu fügender Einzelteile aus, weil die Abstandsmittel integrale Bestandteile des Linsenkörpers sind. Allein durch eine präzise Linsenkörperfertigung sind vorteilhafterweise die auftretenden, die optische Güte der Baugruppe bestimmenden Toleranzen bezüglich des Abstandes zwischen der oder den optisch aktiven Zone(n) und der oder den Linse(n) erheblich vermindert. Die erfindungsgemäße Baugruppe kann weiterhin vorteilhafterweise auf ein weiteres Teil als Träger für den Linsenkörper verzichten. Ein weiterer Vorteil der Erfindung besteht darin, daß die nach dem Stand der Technik gemäß der EP-A1-0 529 947 notwendige Oberflächenstrukturierung (Ausrichthilfen) der Basisplatte und eine präzise Positionierung des optoelektronischen Bauteils in bezug auf die Ausrichthilfen nicht erforderlich sind.

Eine bevorzugte Ausbildung der erfindungsgemäßen Baugruppe sieht vor, daß die Abstandsmittel zapfenartige Erhebungen sind, deren Höhe gemäß dem gewünschten Abstand zwischen der optisch aktiven Zone und der Linse bemessen ist. Besonders vorteilhaft können die Erhebungen linsenförmig ausgebildet sein, so daß jeweils exakte Kontakt- bzw. Anschlagpunkte definiert sind.

Eine herstellungstechnisch bevorzugte Fortbildung der erfindungsgemäßen Baugruppe sieht vor, daß die Abstandsmittel Ausformungen des Linsenkörpermaterials sind.

Eine bevorzugte Ausgestaltung der Erfindung sieht vor, daß die höchsten Punkte der Erhebungen in einer Ebene mit der optischen Achse der Linse liegen. Dadurch sind die Kontaktbereiche der Erhebungen mit dem Bauteil in ausreichendem Abstand zum Fußbereich des Bauteils, so daß ein ausreichender Freiraum für Montagemittelreste (z. B. Klebstoff, Lot) unterhalb der Erhebungen existiert. Sofern sich die optisch aktive Zone an der oberen Längskante des Bauteils befindet, gewährleistet die vorstehend beschriebene Ausbildung der Erfindung auch dann eine präzise Abstandseinstellung, wenn das Bauteil durch Vereinzelung an Sollbruchstellen separiert worden ist; von der Sollbruchstelle zum Fußbereich ausgehende fehlerhafte oder unregelmäßige Bruchflächen wirken sich dann nicht störend aus.

Eine weitere Verminderung der Anzahl der Freiheitsgrade und damit des Justageaufwandes läßt sich nach einer bevorzugten Weiterbildung der Erfindung dadurch erreichen, daß der Linsenkörper auf der Basisplatte fixiert und in seiner Höhe derart bemessen ist, daß die Linse auf die Höhe der optisch aktiven Zone ausgerichtet ist.

Eine besonders vorteilhafte Weiterbildung der Erfindung besteht bei einem optoelektronischen Bauteil mit mehreren in einer Reihe angeordneten optisch aktiven Zonen und mit einem Linsenkörper mit einer entsprechenden Anzahl in einer Reihe angeordneter Linsen darin, daß die Abstandsmittel in Reihe mit den Linsen angeordnet sind.

Bei einer optoelektronischen Baugruppe, bei der das optoelektronische Bauteil mehrere in einer Ebene angeordnete optisch aktive Zonen (oberflächenaktives zweidimensionales Array) hat und bei der der Linsenkörper eine entsprechende Anordnung zugeordneter Linsen aufweist (zweidimensionales Linsen-Array), ist es besonders vorteilhaft, wenn auf der Oberfläche des optoelektronischen Bauteils zumindest drei definierte Auflagebereiche für die Abstandsmittel vorgesehen sind.

Eine besonders präzise und montagefreundliche Positionierung des Linsenkörpers ist nach einer weiteren vorteilhaften Weiterbildung der Erfindung dadurch erreichbar, daß die Auflagebereiche von ringförmigen, vorzugsweise erhabenen, Markierungen umgeben sind.

Die Erfindung wird nachfolgend anhand einer Zeichnung näher erläutert; in stark vergrößerter Darstellung zeigen die Figuren 1 und 2 ein erstes Ausführungsbeispiel in Aufsicht- und Schnittdarstellung und die Figuren 3 und 4 ein weiteres Ausführungsbeispiel in Aufsicht- und Schnittdarstellung.

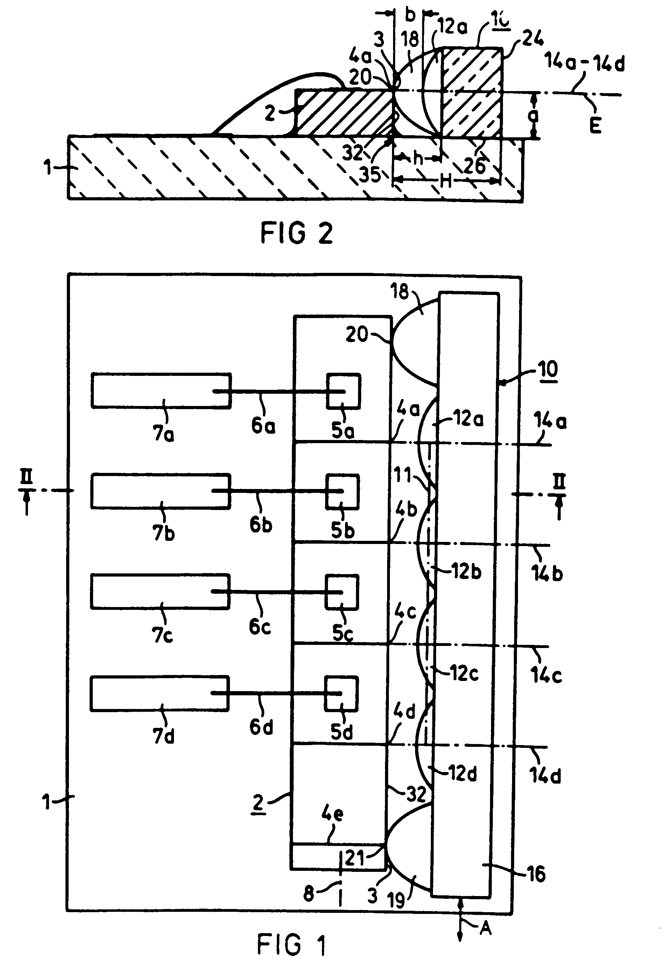

Nach den Figuren 1 und 2 umfaßt die Baugruppe eine keramische Basisplatte 1, die ein optoelektronisches Bauteil 2 trägt. Das Bauteil hat an seiner vorderen Kante 3 eine Vielzahl als Laserdioden (Laserdioden-Array) ausgebildete optisch aktive Zonen 4a, 4b, 4c, 4d, 4e, die tatsächlich infolge ihrer Strukturierung bei entsprechender Vergrößerung als waagerechte Striche erkennbar sind. Die Laserdioden sind durch (nicht dargestellte) unterseitige Kontaktierung des Bauteils 2 und durch individuelle Kontaktflecke 5a bis 5d und Bonddrähte 6a bis 6d mit Leiterbahnen 7a bis 7d zur individuellen Ansteuerung verbunden und in einer Reihe 8 ausgerichet. Die optisch aktive Zone 4e ist nicht kontaktiert.

Ein aus einem länglichen Glasstreifen einstückig gebildeter Linsenkörper 10 weist eine der Anzahl der kontaktierten optisch aktiven Zonen 4a bis 4d entsprechende Anzahl in einer Reihe 11 angeordneter refraktiver oder diffraktiver Linsen 12a bis 12d mit jeweiligen optischen Achsen 14a bis 14d auf. Der Linsenkörper 10 ist einteilig ausgebildet, wobei durch Ausformungen des Linsenkörpermaterials 16 in Reihe 11 mit den Linsen 12a bis 12d zapfenartige Erhebungen 18, 19 gebildet sind. Die jeweils höchsten Punkte 20, 21 der Erhebungen 18, 19 liegen in einer Ebene E mit den optischen Achsen 14a bis 14d der Linsen. Die Höhe H bzw. h der Erhebungen in bezug auf die Rückseite 24 des Linsenkörpers 10 bzw. auf die Linsen 12a bis 12d ist derart bemessen, daß der Abstand der höchsten Punkte 20, 21 zu den höchsten Punkten der Linsen 12a bis 12d dem gewünschten Abstand b zwischen den optisch aktiven Zonen 4a bis 4d und den Linsen 12a bis 12d entspricht. Der Linsenkörper 10 ist mit seiner Unterseite 26 ebenfalls auf der Basisplatte 1 fixiert, wobei die Höhe a der optischen Achsen 14a bis 14d der Linsen 12a bis 12d in bezug auf die Basisplatte 2 derart bemessen ist, daß die optischen Achsen 14a bis 14d zu den optisch aktiven Zonen 4a (Figur 2) ausgerichtet sind.

Da die Erhebungen 18, 19 mit ihren jeweils höchsten Punkten 20, 21 unmittelbar an eine Seitenfläche 32 des optoelektronischen Bauteils 2 anschlagen, ist eine vergleichsweise gering toleranzbehaftete Einstellung des Abstandes b zwischen der Zone 4a und der Linse 12a gewährleistet. Der Kontakt zwischen den Erhebungen und dem Bauteil befindet sich an der Kante 3 des Bauteils 2, so daß ein unterer Fußbereich 35 des Bauteils 2 Klebstoff- und/oder Lotreste aufweisen kann, ohne die Abstandseinstellung zu beeinträchtigen.

Die Montage der Baugruppe erfolgt, indem zuerst das Bauteil 2 auf die Basisplatte 1 montiert wird. Nach elektrischer Kontaktierung der Kontakt flecken 5a bis 5d wird der Linsenträger 10 so aufgesetzt, daß die höchsten Punkte 20, 21 der Erhebungen 18, 19 an dem Bauteil 2 anliegen und der Linsenträger 10 mit seiner Unterseite 26 glatt auf der Basisplattenoberfläche aufliegt. Damit sind die Höhe a der Linse, der axiale Abstand b sowie alle Winkellagen definiert. Der einzig noch bestehende Freiheitsgrad in Richtung des Pfeils A kann passiv - d. h. ohne Betrieb des optoelektronischen Bauteils - festgelegt werden. Dazu dient in besonders vorteilhafter Weise der Streifen der optisch aktiven Zone 4e gegenüber dem sich der höchste Punkt 21 der Erhebung 19 vergleichsweise einfach ausrichten läßt. Die Fixierung des Linsenträgers kann durch Kleben oder Löten erfolgen. Zur Lötung können die Lötflächen mit einem lötfähigen Metall beschichtet sein, das mit planaren Methoden strukturiert aufgebracht werden kann.

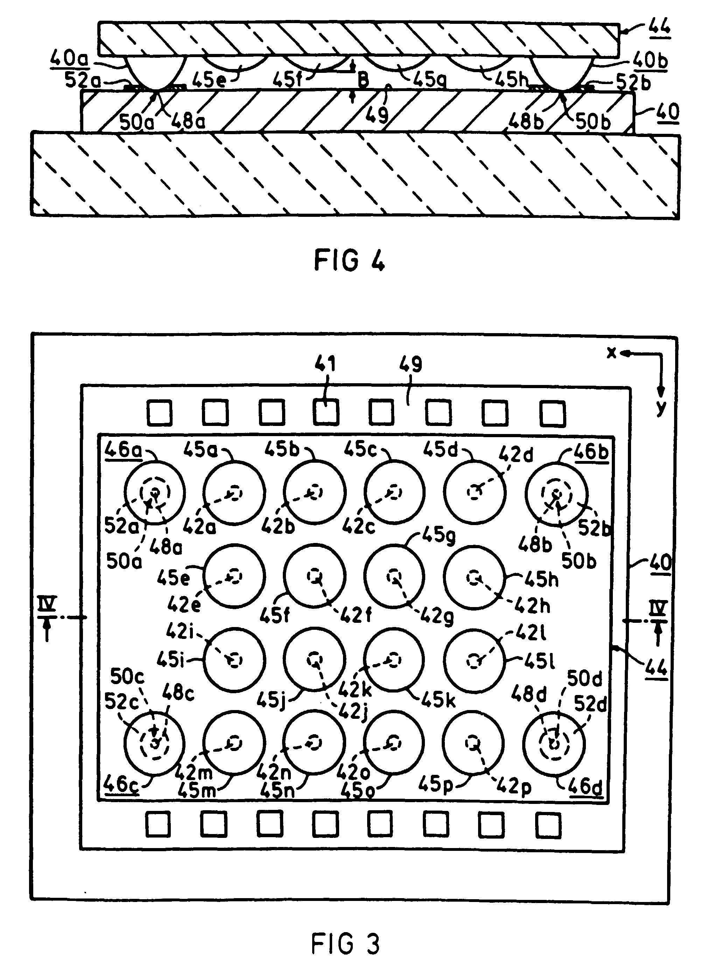

Die Figuren 3 und 4 zeigen ein weiteres Ausführungsbeispiel einer optoelektronischen Baugruppe mit einem optoelektronischen Bauteil 40 mit Kontakt flecken 41 zur individuellen elektrischen Kontaktierung lichtempfindlicher optisch aktiver Zonen 42a bis 42p, die als zweidimensionale (X-Y) 4*4-Matrix eines oberflächenaktiven Fotodiodenarrays ausgebildet sind. Parallel zu der X-Y-Ebene der optisch aktiven Zonen 42a bis 42p ist ein Linsenkörper 44 mit einer entsprechenden zweidimensionalen Anordnung von Linsen 45a bis 45p in einer 4*4-Matrix (Linsenarray) vorgesehen. In jedem Eckbereich des Linsenkörpers 44 ist als Abstandsmittel eine zapfenförmige Erhebung 46a bis 46d vorgesehen, die jeweils einen definierten Auflagebereich 48a bis 48d auf der Oberfläche 49 des Bauteils 40 aufweist. Die Erhebungen 46a bis 46d können bevorzugt linsenförmig ausgebildet sein, so daß sich im wesentlichen punktförmige Kontakte mit den Auflagebereichen 48a bis 48d ergeben. Wie im Zusammenhang mit dem ersten Ausführungsbeispiel bereits ausführlich erläutert, sind die Höhe bzw. die jeweils höchsten Punkte (in Figur 4 sind die höchsten Punkte 50a und 50b der Erhebungen 46a und 46b erkennbar) gemäß dem gewünschten Abstand B zwischen der jeweils optisch aktiven Zone (z. B. 42f) und der ihr zugeordneten Linse (z. B. 45f) bemessen. Die Auflagebereiche 48a bis 48d sind jeweils von ringförmigen Markierungen und 52a bis 52d umgeben. Die Markierungen erheben sich über die Oberfläche 49 des Bauteils 40 und dienen sowohl als Lagemarkierung für die Positionierung der zapfenförmigen Erhebungen 48a bis 48d bei der Montage als auch zur automatischen Lagefixierung. Dazu ist die Höhe der Markierungen derart gewählt, daß die Erhebungen in diese einrasten. In dieser Position kann der Linsenträger z. B. durch Kleben fixiert werden. Eine alternative Fixierungsmethode besteht in einer Metallisierung der Erhebungen, durch die der Linsenkörper 44 mit dem Bauteil 40 verlötet werden kann. Bei exakter Positionierung der Markierungen kann bei dieser Ausgestaltung der Erfindung auf eine Justage vollständig verzichtet werden.

Der Linsenträger kann jeweils beispielsweise aus Glas oder Silizium bestehen; neben planaren Strukturierungsmethoden in Verbindung mit Ätztechniken lassen sich auch Linsenträger einstückig aus Glas als Preßglasteile herstellen.

## Patentansprüche

1. Optoelektronische Baugruppe
mit einer Basisplatte (1), die ein optoelektronisches Bauteil (2) mit mindestens einer optisch aktiven Zone (4a) trägt, mit einem Linsenkörper (10) mit mindestens einer der optisch aktiven Zone (4a) zugeordneten Linse (12a) und mit Abstandsmitteln, die integrale Bestandteile des Linsenkörpers (10) sind,
**dadurch gekennzeichnet**, daß
die Abstandsmittel (18,19) zur Einstellung eines gewünschten lichten Abstandes (b) zwischen der optisch aktiven Zone (4a) und der Linse (12a) unmittelbar an dem optoelektronischen Bauteil (2) anliegen.

2. Baugruppe nach Anspruch 1,
**dadurch gekennzeichnet**, daß
die Abstandsmittel (18,19) zapfenartige Erhebungen sind, deren Höhe (H) gemäß dem gewünschten Abstand zwischen der optisch aktiven Zone (4a) und der Linse (12) bemessen ist.

3. Baugruppe nach Anspruch 2,
**dadurch gekennzeichnet**, daß
die Erhebungen linsenförmig sind.

4. Baugruppe nach einem der vorangehenden Ansprüche,
**dadurch gekennzeichnet,** daß
die Abstandsmittel (18,19) Ausformungen des Linsenkörpermaterials (16) sind.

5. Baugruppe nach einem der Ansprüche 2-4,
**dadurch gekennzeichnet**, daß
die höchsten Punkte (20,21) der Erhebungen (18,19) in einer Ebene (E) mit der optischen Achse (14a) der Linse (12a) liegen.

6. Baugruppe nach einem der vorangehenden Ansprüche,
**dadurch gekennzeichnet**, daß
der Linsenkörper (10) auf der Basisplatte (1) fixiert und in seiner Höhe derart bemessen ist, daß die Linse (12a) auf die Höhe (a) der optisch aktiven Zone (4a) ausgerichtet ist.

7. Baugruppe nach einem der vorangehenden Ansprüche,
**dadurch gekennzeichnet**, daß
das optoelektronische Bauteil (2) mehrere in einer Reihe (8) angeordnete optisch aktive Zonen (4a bis 4d) hat, daß der Linsenkörper (10) zumindest eine entsprechende Anzahl in einer Reihe (11) angeordneter Linsen (12a bis 12d) hat und daß die Abstandsmittel (18,19) in Reihe mit den Linsen (12a bis 12d) angeordnet sind.

8. Baugruppe nach einem der Ansprüche 1 bis 4,
**dadurch gekennzeichnet**, daß
das optoelektronische Bauteil (40) mehrere in einer Ebene (X-Y) angeordnete optisch aktive Zonen (42a bis 42p) hat, daß der Linsenkörper (44) eine entsprechende Anordnung zugeordneter Linsen (45a bis 45p) aufweist und daß auf der Oberfläche (49) des optoelektronischen Bauteils (40) zumindest drei definierte Auflagebereiche (48a bis 48d) für die Abstandsmittel (46a bis 46d) vorgesehen sind.

9. Baugruppe nach Anspruch 8,
**dadurch gekennzeichnet**, daß
die Auflagebereiche (48a bis 48d) von ringförmigen, vorzugsweise aus der Oberfläche des Bauteils herausragenden, Markierungen (52a bis 52d) umgeben sind.

## Claims

1. Optoelectronic assembly having a base plate (1) which is fitted with an optoelectronic component (2) with at least one optically active zone (4a), having a lens element (10) with at least one lens (12a) assigned to the optically active zone (4a) and having spacing means which are integral components of the lens element (10), characterized in that the spacing means (18, 19) for setting a desired clear interval (b) between the optically active zone (4a) and the lens (12a) bear directly against the optoelectronic component (2).

2. Assembly according to Claim 1, characterized in that the spacing means (18, 19) are pin-like elevations whose height (H) is dimensioned in accordance with the desired interval between the optically active zone (4a) and the lens (12).

3. Assembly according to Claim 2, characterized in that the elevations are lens-shaped.

4. Assembly according to one of the preceding claims, characterized in that the spacing means (18, 19) are elevations of the lens element material (16).

5. Assembly according to one of Claims 2-4, characterized in that the highest points (20, 21) of the elevations (18, 19) lie in a plane (E) with the optical axis (14a) of the lens (12a).

6. Assembly according to one of the preceding claims, characterized in that the lens element (10) is fixed on the base plate (1) and its height is dimensioned such that the lens (12a) is aligned with the height (a) of the optically active zone (4a).

7. Assembly according to one of the preceding claims, characterized in that the optoelectronic component (2) has a plurality of optically active zones (4a to 4d) which are arranged in a row (8), in that the lens element (10) has at least a corresponding number of lenses (12a to 12d) arranged in a row (11), and in that the spacing means (18, 19) are arranged in a row with the lenses (12a to 12d).

8. Assembly according to one of Claims 1 to 4, characterized in that the optoelectronic component (40) has a plurality of optically active zones (42a to 42p) which are arranged in a plane (X-Y), in that the lens element (44) has a corresponding arrangement of associated lenses (45a to 45p), and in that at least three defined bearing regions (48a to 48d) for the spacing means (46a to 46d) are provided on the surface (49) of the optoelectronic component (40).

9. Assembly according to Claim 8, characterized in that the bearing regions (48a to 48d) are surrounded by annular markings (52a to 52d) which preferably project from the surface of the component.

## Revendications

1. Module optoélectronique comportant une plaque (1) de base, qui porte un composant (2) optoélectronique ayant au moins une zone (4a) active du point de vue optique, comportant un élément (10) formant lentille ayant au moins une lentille (12a) associée à la zone (4a) active du point de vue optique et comportant des moyens d'écartement qui font partie intégrale de l'élément (10) formant lentille, caractérisé en ce que les moyens (18, 19) d'écartement sont en contact direct avec le composant (2) optoélectronique pour régler un écartement (b) souhaité entre la zone (4a) active du point de vue optique et la lentille (12a).

2. Module suivant la revendication 1, caractérisé en ce que les moyens (18, 19) d'écartement sont des élévations du genre de tourillons dont la hauteur (H) est déterminée suivant la distance souhaitée entre la zone (4a) active du point de vue optique et la lentille (12).

3. Module suivant la revendication 2, caractérisé en ce que les élévations sont en forme de lentilles.

4. Module suivant l'une des revendications précédentes, caractérisé en ce que les moyens (18, 19) d'écartement sont des déformations du matériau (16) de l'élément formant lentille.

5. Module suivant l'une des revendications 2 à 4, caractérisé en ce que les points (20, 21) les plus élevés des élévations (18, 19) se trouvent dans un plan (E) comportant l'axe (14a) optique de la lentille (12a).

6. Module suivant l'une des revendications précédentes, caractérisé en ce que l'élément (10) formant lentille est immobilisé sur la plaque (1) de base et en ce que sa hauteur est déterminée de manière que la lentille (12a) soit orientée sur la hauteur (a) de la zone (4a) active du point de vue optique.

7. Module suivant l'une des revendications précédentes, caractérisé en ce que le composant (2) optoélectronique a plusieurs zones (4a à 4d) actives du point de vue optique, disposées en une rangée (8), en ce que l'élément (10) formant lentille a au moins un nombre correspondant de lentilles (12a à 12d) disposées en un rangée (11) et en ce que les moyens (18, 19) d'écartement sont disposés en série avec les lentilles (12a à 12d).

8. Module suivant l'une des revendications 1 à 4, caractérisé en ce que le composant (40) optoélectronique a plusieurs zones (42a à 42p) actives du point de vue optique, montées dans un plan (X-Y), en ce que l'élément (44) formant lentille comporte un dispositif correspondant de lentilles (45a à 45p) associées et en ce qu'il est prévu à la surface (49) du composant (40) optoélectronique au moins trois zones (48a à 48d) de support définies destinées aux moyens (46a à 46d) d'écartement.

9. Module suivant la revendication 8, caractérisé en ce que les zones (48a à 48d) de support sont entourées de repères (52a à 52d) annulaires, de préférence faisant saillie de la surface du composant.
